# EUROPÄISCHE PATENTSCHRIFT

(11) **EP 2 380 770 B1**
(45) Veröffentlichungstag und Bekanntmachung des Hinweises auf die Patenterteilung: **01.08.2018**
(21) Anmeldenummer: 11401064.8
(22) Anmeldetag: 20.04.2011
(51) Int. Cl.: B60P 3/08

(54) **Transportfahrzeug, insbesondere Fahrzeugtransporter für Pkws**
Transport vehicle, in particular vehicle transporter for cars
Véhicule du transport, en particulier véhicule pour les voitures

(30) Priorität: 22.04.2010 DE 202010005277 U
(43) Veröffentlichungstag der Anmeldung: 26.10.2011
(73) Patentinhaber: Grädtke, Gudrun, 09130 Chemnitz (DE)
(72) Erfinder: Merkel, Rico, 09122, Auerswalde (DE)
(74) Vertreter: Rumrich, Gabriele

(56) Entgegenhaltungen:
- EP-A1- 0 654 373
- AU-A- 7 827 975
- DE-A1- 2 901 435
- DE-A1- 3 336 014
- DE-C- 866 913
- DE-U1-202007 006 677
- FR-A1- 2 896 738
- US-A- 3 586 119
- US-A- 3 729 224
- US-A- 5 387 002
- US-A1- 2007 110 535
- US-A1- 2008 036 172

## Beschreibung

Die Erfindung betrifft ein Transportfahrzeug, insbesondere einen Fahrzeugtransporter für Pkws.

Aus DE 689 15 877 T2 ist beispielsweise ein Autotransporter bekannt, der in ein Trag-Zugfahrzeug und ein tragendes Gerüst getrennt werden kann, wobei das Straßenfahrzeug aus einem ausbaubaren Aufbau, der ohne Achse ist und von dem Trag-Zugfahrzeug getragen wird und aus einem Anhänger mit zentralen Achsen, der an dem ausbaubaren Aufbau angekoppelt ist, gebildet wird. Das Trag-Zugfahrzeug weist einen Koppelungsteil zum Feststellen in Längsrichtung und eine Abstützung im vorderen Bereich seines Fahrgestells auf. Der ausbaubare Aufbau besitzt in seinem hinteren Bereich einen Sockel für einen Kupplungshaken und wird aus einem Gestell und aus einem oberen Gerüst gebildet. Der ausbaubare Aufbau wird im ausgebauten Zustand stabil gestützt, wobei in dieser Stellung das Trag-Zugfahrzeug unter den Aufbau für eine gegenseitige Verbindung durch einen einfachen Kopplungsvorgang fahren kann. Das Straßenfahrzeug, in dem das Gestell des ausbaubaren Aufbaus starr und unmittelbar an dem Fahrgestell des Trag-Zugfahrzeuges befestigt ist, weist eine zusätzliche Kopplungsvorrichtung für seine Kopplung mit der Kopplungsvorrichtung des Trag-Zugfahrzeuges und Vorrichtungen für das Feststellen, die mit dem Fahrgestell des Trag-Zugfahrzeuges zusammenwirken, auf. Es sind weitere Einrichtungen zur Abstützung in der stabilen, ausgebauten, gekoppelten Stellung des tragenden Gerüstes zusätzlich zu den vorderen Vorrichtungen zur Abstützung, die auf dem ausbaubaren Aufbau angeordnet sind, sowie eine Vorrichtung für eine Zwischenabstützung enthalten, die in dem Bereich der Koppelung liegt, der sich zwischen der hinteren Achse des Trag-Zugfahrzeuges und der vorderen Stirnseite des Anhängers erstreckt und einen dazwischen liegenden Abstützpunkt für das tragende Gerüst bildet, vorgesehen.
Das tragende Gerüst dient zur Aufnahme von Bühnen, auf welchen die Pkws positioniert werden. Es ist bei dieser Lösung vorteilhaft, dass der gesamte Aufbau von der Zugmaschine abgekoppelt werden kann, jedoch ist für diesen eine aufwendige Stützkonstruktion erforderlich und es sind keine Achsen am Aufbau vorgesehen. Der Anhänger ist mit zwei oder drei Achsen versehen, zu deren Bereifung keine Aussage getroffen wird.

Auch in EP 0241 919 A1 und DE 78 21 681 U1 weisen die Anhänger der dort beschriebenen Fahrzeugtransporter zwei Achsen auf, die in großem Abstand zur hinteren Antriebsachse des Zugfahrzeuges und somit in Richtung zum Ende des Anhängers angeordnet sind. Die Achsen der Anhänger weisen dabei immer die gleiche Bereifung auf.

Aus DE 10 2004 056 825 A1 ist ein Autotransporter bekannt, mit welchem viele Pkws transportiert werden sollen und der eine große Fahrerkabine zur Verfügung stellt. Der Autotransporter weist dabei einen von einer Vorderachse und einer Hinterachse getragenen Rahmen aus, an welchem eine Bühne für Fahrzeuge angeordnet ist, wobei die Bühne wenigstens mit einem ihrer Enden zwischen dem Rahmen, insbesondere unter das Rahmenniveau, absenkbar ist. Dazu ist der Rahmen zwischen Vorderachse und Hinterachse abgesenkt.
Nachteilig ist bei den drei vorgenannten Lösungen, dass die Zugmaschine mit einem Rahmen ausgestattet ist, wodurch keine herkömmliche Zugmaschine verwendet werden kann.
Weiterhin sind, insbesondere durch die Achsanordnung, das Ladevolumen und das Transportgewicht des vorgenannt beschriebenen Transportfahrzeuges begrenzt. Ungünstig sind dafür ebenfalls die Art der Bereifung sowie die Ausbildung der Rahmen. In der Druckschrift DE 866 913 wird ein Straßen- oder Schienenlastzug beschrieben, der zur Beförderung kleinerer Fahrzeuge (PKWs) dient und bei welchem die Abstützung des Fahrgestells durch zwei dicht hintereinander liegende Räderpaare mit Einzelbereifung erfolgt. Im Bereich der Räderpaare sind Lenkerpaare vorgesehen, an welchen Schienen der Hebebühne angebracht sind. Gemäß der Abbildung dieser Druckschrift kann ein Fahrzeug zwischen die einzelbereiften Räderpaare eingreifen. Auch die in FR 0 214 919 A1 beschriebene Lösung weist zum Fahrzeugtransport einen Anhänger mit zwei einzelbereiften Achsen auf, wobei die Fahrzeuge teilweise zwischen die Räder der Achsen eintauchen können.
Eine Straßeneinheit mit einer absetzbaren Trägerkarosserie ist aus der Druckschrift DE 689 15 877 T2 bekannt. Bei dieser Lösung wird ein Trag-Zugfahrzeug mit einem ausbaubarem Aufbau beschrieben, der keine Radachse aufweist und auf dem Trag-Zugfahrzeug befestigbar (aufsattelbar) ist. Der damit verbindbare Anhänger weist zwei hintereinander angeordnete Achsen mit Zwillingsbereifung auf, wobei die geladenen PKWs über den zwillingsbereiften Rädern des Anhängers angeordnet sind.
Weiterhin besteht das Problem, dass das Fahrgestell nach dem Absatteln abgestützt werden muss.

Bei dem bekannten Stand der Technik ist der auf der Zugmaschine angeordnete Aufbau nie mit einer Bereifung versehen und besitzt eine nur begrenzte Traglast.

Der Nachteil der drei vorgenannten Lösungen besteht darin, dass entweder die Nutzlast oder das Ladevolumen eingegrenzt ist und sich somit in jedem Fall der Ladefaktor verringert.

Zusammenfassend muss festgestellt werden, dass es bekannt ist, absattelbare Rucksackaufbauten zum Einsatz zu bringen. Diese ermöglichen das Absatteln und gegebenenfalls das Austauschen der Zugmaschine. Diese Konstruktion birgt große Vorteile sowohl für die Fertigung als auch für mögliche Reparaturen in sich und ermöglicht zudem eine große Flexibilität im Einsatz der Aufbauten. Der größte Vorteil liegt jedoch in der nunmehr möglich gewordenen weitestgehenden Vor-Fertigung des Autotransporteraufbaus.
Allerdings weisen derartige Konstruktionen auch einen erheblichen Nachteil auf, der in dem ungünstigen Proportionalverhalten von Zugmaschine zu Anhänger besteht. Dies hat zur Folge, dass zum einen auf der Zugmaschine maximal 2-3 Fahrzeuge verladen werden können, somit werden individuelle Ladungen wie z.B. 6 Pkw und 2 Busse nicht mehr möglich, ohne die gesetzlich zulässigen Gesamtlängen bzw. -höhen zu überschreiten. Entsprechend sind derartige Konstruktionen sehr unflexibel hinsichtlich des Ladefaktors.
An herkömmlichen Anhängern werden generell immer reinrassige Achsaggregate zum Einsatz gebracht - entweder mit Einzelbereifung *oder* mit Doppelbereifung. Der Vorteil der Zwillingsbereifung liegt darin, dass auf diese Weise ausreichend Nutzlast für die Transportmittel zur Verfügung steht. Der Nachteil liegt darin, dass der Laderaum zu niedrig ist.

Der Vorteil bei der Einzelbereifung liegt darin, dass es hiermit erstmalig möglich war, im Bereich der oberen Reifenhälfte Fahrzeuge zu verladen. Der Nachteil liegt hierbei in einer eingeschränkten Nutzlast, wodurch das Verladen von größeren (schwereren) Fahrzeugen nicht möglich ist, da eine ausreichende Nutzlast durch den Einsatz von einzelbereiften Achsaggregaten nicht mehr möglich ist.

Aufgabe der Erfindung ist es, ein Transportfahrzeug, insbesondere einen Fahrzeugtransporter für Pkws, zu entwickeln, welches mit einer herkömmlichen Zugmaschine einsetzbar ist, ein großes Ladevolumen gewährleistet und ein hohes zulässiges Gesamtgewicht ermöglicht und damit neuen Modellen von zu transportierenden Fahrzeugen (z.B. PKWs) zusätzlichen Laderaum verschafft und damit den Ansprüchen der neuen Modellgenerationen von PKWs Rechnung trägt.

Diese Aufgabe wird mit den Merkmalen des ersten und zweiten Patentanspruchs gelöst.
Vorteilhafte Ausgestaltungen ergeben sich aus den Unteransprüchen.

Das Transportfahrzeug in Form eines Fahrzeugtransporters der eine Zugmaschine mit wenigstens einer Vorderachse und wenigstens einer Hinterachse aufweist, wobei an die Zugmaschine ein Aufbau, der mit einem ersten Traggerüst für das Transportgut versehen ist und erfindungsgemäß
der Aufbau gestellfest, nicht schwenkbar mit der Zugmaschine verbunden ist und eine Nachlaufachse aufweist, die im angekoppelten Zustand des Aufbaus hinter der Hinterachse der Zugmaschine sitzt und wobei der Aufbau gestellfest mit der Zugmaschine verbunden ist.

Das Transportfahrzeug in Form eines Fahrzeugtransporters kann des Weiteren einen Anhänger aufweisen, der mit einem zweiten Traggerüst für das Transportgut versehbar ist und ein oder mehrere Anhängerachsen aufweist, und mit der Zugmaschine koppelbar ist, wobei der Anhänger ein Achsaggregat mit einer ersten Achse und einer zweiten Achse aufweist, wobei die erste Achse in Form einer laderaumvergrößernden Achse mit Einzelbereifung ausgebildet ist, derart, dass deren Räder in einem Radabstand zueinander angeordnet sind, der ein zumindest teilweises Eintauchen des Transportgutes/PKWs zwischen die Räder der laderaumvergrößernden Achse ermöglicht und wobei die zweite Achse zwillingsbereift ist.

Sowohl die Verwendung eines Aufbaus, der mit einer Nachlaufachse versehen ist, als auch die Verwendung zumindest einer laderaumvergrößernden Achse des Anhängers, die ein Eintauchen eines Fahrzeuges zwischen deren Räder ermöglicht, gewährleisten ein hohes Ladevolumen in Verbindung mit einem hohen Gesamtgewicht und somit eine höhere Nutzlast bei einem niedrigen Eigengewicht.

Es ist weiterhin vorteilhaft, wenn auch die Nachlaufachse des Aufbaus Räder aufweist, die in einem Radabstand zueinander angeordnet sind, der ein Eintauchen des Ladegutes zwischen die Räder der Nachlaufachse ermöglicht.

Vorzugsweise besitzt der Aufbau einen Aufbaurahmen, der zumindest im Bereich der Nachlaufachse ausgespart/abgesenkt und/oder seitlich verbreitert ist, um das Eintauchen des Transportgutes bzw. Fahrzeuges zwischen die Räder der Nachlaufachse zu gewährleisten.
Analog ist auch der Anhängerrahmen des Anhängers zumindest im Bereich der ersten Anhängerachse ausgespart/abgesenkt und/oder seitlich verbreitert.
Weiterhin ist es möglich, dass der Aufbaurahmen zumindest im Bereich der Nachlaufachse in etwa bis auf das Niveau des Achskörpers der Nachlaufachse oder tiefer und/oder dass der Anhängerrahmen zumindest im Bereich der laderaumvergrößernden Achse in etwa bis auf das Niveau des Achskörpers der laderaumvergrößernden Achse oder tiefer abgesenkt ist.
Der Aufbau wird vorzugsweise gestellfest mit der Zugmaschine verbunden und der Anhänger ist an die Zugmaschine oder an den auf der Zugmaschine befestigten Aufbau koppelbar.

Der vordere Bereich des Aufbaus greift über die Ladefläche der Zugmaschine bis nahe zum oder über das Fahrerhaus und ist damit fest verbindbar, so dass die Zugmaschine und der Aufbau im montierten Zustand eine konstruktive Einheit darstellen.
Ein Bereich des Aufbaurahmens ragt rückwärtig über die Ladefläche der Zugmaschine (entgegen der Fahrtrichtung) hinaus und ist nach unten abgewinkelt, wobei in dem nach unten abgewinkelten Bereich die Nachlaufachse des Aufbaus angeordnet ist.
Ein besonders großen Ladevolumen kann erzielt werden, wenn der Aufbaurahmen unter der Nachlaufachse und/oder der Anhängerrahmen zumindest unter der laderaumvergrößernden Achse des Anhängers durchgeführt wird/werden.

Der Anhänger kann zusätzlich zur laderaumvergrößernden Achse, die ein Eintauchen eines Fahrzeuges zwischen deren Räder ermöglicht, ein oder mehrere weitere Achsen aufweisen, die anders beziehungsweise unterschiedlich bereift sein können.
Vorzugsweise ist die laderaumvergrößernde Achse des Anhängers einzelbereift und die andere/n Achse/n mehrfach bereift, z.B. zwillingsbereift. Die laderaumvergrößernde Achse des Anhängers, zwischen deren Räder das Transportgut/Fahrzeug greift, ist bevorzugt in Fahrtrichtung vor den anderen Achsen des Anhängers angeordnet, was jedoch nicht zwingend erforderlich ist.
Auch die Nachlaufachse des Aufbaus wird bevorzugt einzelbereift ausgeführt, so dass auch diese zur Vergrößerung des Laderaumes beiträgt.

Alternativ ist es jedoch auch möglich, die Nachlaufachse und/oder die erste Achse des Anhängers so auszuführen, dass die Breite und/oder der Durchmesser der Reifen der Nachlaufachse und/oder der laderaumvergrößernden Achse, kleiner ist als die Breite und/oder der Durchmesser der Reifen der anderen Achsen, so dass gewährleistet ist, dass mindestens ein PKW (Ladegut) zumindest teilweise zwischen den Reifen der Nachlaufachse des Aufbaus und/oder mindestens ein weiterer PKW (Ladegut) zumindest teilweise zwischen den Reifen der laderaumvergrößernden Achse des Achsaggregats des Anhängers positionierbar ist.

Durch das Nachsetzen der Nachlaufachse des Aufbaus nach der eigentlichen Antriebsachse der Zugmaschine mit damit verbundener nach außen liegender Rahmenkonstruktion wird eine Aushöhlung im Rahmenbereich bzw. Heckbereich des Fahrzeugaufbaus ermöglicht. Es wird somit erstmalig ein Aufbau für eine Zugmaschine verwendet, der durch seine Nachlaufachse eine erhebliche Vergrößerung der Nutzlast gewährleistet. Weiterhin ist das Entfernen des Aufbaus von der Zugmaschine einfacher, da dieser mit der eigenen Bereifung (eigener Achse) versehen ist.

Dabei wird z.B. eine einzelbereifte (Reifenmaß 285/70.19,5) Nachlaufachse des Aufbaus der zwillingsbereiften eigentlichen hinteren Antriebsachse der Zugmaschine nachgesetzt. Die Nachlaufachse trägt dadurch den aufgesattelten Aufbau, der ein erstes Traggerüst aufweist, zusätzlich, so dass eine Erhöhung des zulässigen Gesamtgewichts um ca. 7.000 kg sowie eine wesentliche Erhöhung des Ladevolumens ermöglicht werden.

Die Erhöhung des Ladevolumens wird dadurch gewährleistet, dass die spezielle Aufbauträgerrahmenkonstruktion (Aufbaurahmen mit Traggerüst), die durch die Nachlaufachse des Aufbaus möglich ist, einen zusätzlichen Laderaum zur Verfügung stellt. Dadurch ist es möglich, ein Fahrzeug in dem Bereich zwischen hinterer Antriebsachse der Zugmaschine und Nachlaufachse des Aufbaus nach unten in den entstandenen Raum zwischen hinterer Antriebsache der Zugmaschine und dem Raum zwischen den Rädern der Nachlaufachse des Aufbaus zu laden.
Die Vorteile der Nachlaufachse bestehen somit zum einen in einer Verringerung der Gesamthöhe, da das Fahrzeug zu ca. 30 % in den geschaffenen Laderaum abtauchen kann. In der Folge kann der Verlader seine gesamte Ladung besser ineinander verschachteln und somit seine Ladung besser kompensieren und einen höheren Ladefaktor erzielen. Gleichzeitig ist es durch die Nachlaufachse möglich, die hintere Antriebsachse der Zugmaschine vorzusetzen und damit eine deutliche Gewichtsentlastung der Lenkachse zu erzielen, was sich wiederum zum einen positiv auf die Verteilung des Gesamtgewichtes des Zuges auswirkt und zum anderen ein weitaus bequemeres und einfacheres An- und Abbauen des Aufbaus von der Zugmaschine ermöglicht. Der Vorteil wird besonders dann deutlich, wenn der Spediteur eine Werkstatt für Reparaturarbeiten an der Sattelzugmaschine in Anspruch nehmen muss. Des Weiteren kann als Zugmaschine eine standardisierte Sattelzugmaschine - in Serie produziert - genutzt werden, wodurch ein einzelnes Verwerten und Austauschen des Zugfahrzeuges möglich wird. Der Aufbauhersteller muss den Aufbau auf den Chassis also nicht individuell aufbauen, da diese einfach angesattelt werden kann und dann insbesondere gestellfest mit der Zugmaschine verbunden wird.
Bei dieser Entwicklung wird demnach ein Aufbau zur Verfügung gestellt, welcher erfindungsgemäß erstmalig über ein eigenes einzelbereiftes Nachlaufaggregat verfügt. Dadurch ist eine einfache Vorfertigung des Aufbaus möglich, womit auch dessen Genehmigungsverfahren vereinfacht und standardisiert werden kann. Somit bedarf es keiner Genehmigung des Herstellers der Zugmaschine mehr, wenn entsprechende Aufbauten verwendet werden sollen. Damit entfallen zusätzliche Genehmigungskosten des Zugmaschinenherstellers.

Durch den Einsatz eines Anhängers mit Mischachsaggregat (erste Achse und zweite Achse sowie ggf. dritte Achse) des Anhängers können unterschiedlich bereifte Achsen in Form einer einzelbereiften ersten Achse und einer zwillingsbereiften zweiten Achse kombiniert werden und gleichzeitig zum Einsatz kommen. Diese Kombination von unterschiedlichen Achsaggregaten am Anhänger ermöglicht es, die eigentlich erforderliche Nutzlast für den Kfz-Transport zu schaffen sowie gleichzeitig den Ladefaktor zu erhöhen und den umbauten Raum zu kompensieren. Durch die Verwendung einer Achse mit Einzelbereifung ist das bessere Abtauchen des in diesem Bereich (z.B. mittig) verladenen Fahrzeuges möglich. Dadurch kann das Ladevolumen des Anhängers deutlich verbessert werden, da der zur Verfügung stehende Laderaum der oberen Bühne deutlich erhöht wird.
Des Weiteren wird durch den Einsatz eines Anhängers mit Mischachsaggregat das gesamte Stützlastverhalten des Anhängers verbessert, denn die zwillingsbereifte zweite Achse, die vorzugsweise hinten angeordnet ist, trägt mit ca. 60% die Hauptlast, während die Vorderachse (erste Achse) mit einer zu tragenden Last zu ca. 40 % weitestgehend entlastet ist und damit das Gesamtbalanceverhalten des Anhängers optimiert wird.

Die Erfindung wird nachfolgend anhand eines Ausführungsbeispiels und zugehöriger Zeichnungen näher erläutert. Es zeigen:
- Figur 1: eine Zugmaschine 1, einen Aufbau 2 beladen und einen Anhänger 3 beladen, wobei Zugmaschine 1, Aufbau 2 und Anhänger 3 voneinander getrennt sind,
- Figur 2: eine Zugmaschine 1 und miteinander verbundener Aufbau 2 und Anhänger 3 (voll beladen),
- Figur 3: einen Aufbau 2 und einen Anhänger 3 (beide voll beladen), die mit der Zugmaschine 1 verbunden sind und ein Transportfahrzeug in Form eines Autotransporters T mit einer Länge L1 bilden,
- Figur 4: einen Aufbau 2 (voll beladen), der mit der Zugmaschine 1 verbunden ist, wodurch ein Transportfahrzeug in Form eines Autotransporters T mit einer Länge L2 gebildet wird.

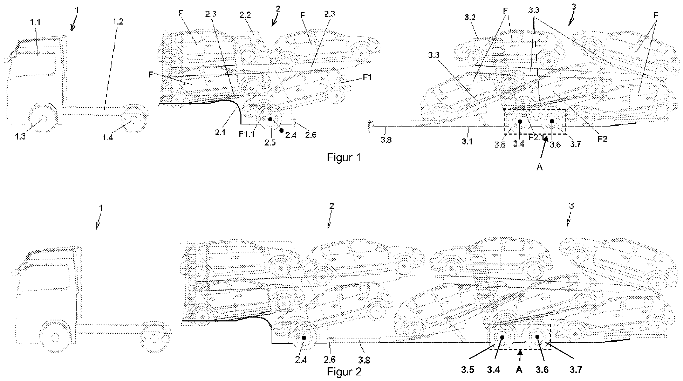

In Figur 1 sind die Grundkomponenten eines Fahrzeugtransporters in Form von Zugmaschine 1, Aufbau 2 und Anhänger 3 einzeln dargestellt.
Die Zugmaschine 1 weist ein Fahrerhaus 1.1, eine Ladefläche 1.2 (Aufsattelfläche) sowie eine vordere Antriebsachse 1.3 und eine hintere Antriebsachse 1.4 auf. Der Aufbau 2 besitzt einen Aufbaurahmen 2.1, auf dem ein erstes Traggerüst 2.2 mit verstellbaren Tragelementen 2.3 zur Aufnahme von hier vier Kraftfahrzeugen F, F1 angeordnet ist.
Der Aufbaurahmen 2.1 ist in Richtung zum Fahrerhaus 1.1 im Wesentlichen horizontal verlaufend ausgebildet, so dass dieser über die Ladefläche 1.2 der Zugmaschine 1 greifen kann. Anschließend fällt der Aufbaurahmen 2.1 (hier im Bogen) nach unten ab und erstreckt sich dann wieder im Wesentlichen horizontal nach hinten.
Der Aufbau 2 weist in dem Bereich, der sich nach unten erstreckt, eine Nachlaufachse 2.4 auf, die mit Reifen 2.5 in Form einer Einzelbereifung (an jedem Achsende ein Rad) bestückt sind. Der Rahmen 2.1 läuft unter der Nachlaufachse 2.4 entlang. Dadurch wird ein zusätzlicher Stauraum zur Verfügung gestellt und somit das in diesem Bereich beladene Fahrzeug F1 teilweise (hier mit seiner Frontseite und seinen Vorderrädern F1.1) in den Aufbaurahmen 2.1 und zwischen die Reifen 2.5 der Nachlaufachse 2.4 eintauchen kann. Der Aufbaurahmen 2 ist weiterhin mit einer Anhängerkupplung 2.6 versehen.

Der Anhänger 3 weist einen Anhängerrahmen 3.1 mit einem zweiten Traggerüst 3.2 sowie mit verstellbaren Tragelementen 3.3 zur Aufnahme von hier fünf Kraftfahrzeugen F, F2 auf. Der Anhänger 3 weist ein Achsaggregat A in Form einer laderaumvergrößernden Achse 3.4 mit Reifen 3.5 in Form einer Einzelbereifung auf, dahinter ist eine zweite Achse 3.6 mit Reifen 3.7 in Form einer Zwillingsbereifung/ Mehrfachbereifung angeordnet, wodurch erstmalig ein Mischachsaggregat eingesetzt wird, welches erstmalig ein größeres Ladevolumen und durch die an beiden Enden zwei Reifen aufweisende zweite Achse 3.6 auch die dafür erforderliche Tragkraft bereitstellt.
Der Anhängerrahmen 3.1 läuft unter den Achsen 3.4, 3.6 des Achsaggregates A entlang. Durch die Einzelbereifung der laderaumvergrößernden Achse 3.4 weisen deren Reifen 3.5 einen Abstand auf, der es gestattet, dass insbesondere in Verbindung mit einer entsprechenden Ausführung des Anhängerrahmens 3.1 ein zusätzlicher Stauraum im Bereich der laderaumvergrößernden Achse 3.4 zur Verfügung gestellt wird, in welchen hier das Fahrzeug F2 mit seinen Rädern F2.1 eintauchen kann. Gemäß einer nicht dargestellten Ausführungsvariante kann der Anhänger 3 auch weitere zusätzliche Achsen aufweisen.
Der Anhänger 3 ist mit einer Deichsel 3.8 versehen, die an die Anhängerkupplung 2.6 des Aufbaus 2 gekoppelt werden kann.
Gemäß Figur 2 wurde der in Figur 1 dargestellte Aufbau 2 mit dem Anhänger 3 verbunden. Dadurch ist im Bereich des Anhängers 3 keine Stütze zum Abstützen dieser Einheit erforderlich, da der Aufbau 2 mit dem Anhänger 3 gekoppelt ist und über die Nachlaufachse 2.4 abgestützt wird. Diese Einheit kann nun mit einer herkömmlichen Zugmaschine 1 z.B. in Form eines Sattelschleppers verbunden werden. Dazu wird der Aufbau 2 bevorzugt gestellfest mit der Zugmaschine 1 verbunden. Dies erfolgt bei einem Sattelschlepper über die Sattelkupplung (nicht dargestellt), auf welche der Aufbau 2 in der Art eines Sattelaufliegers, jedoch bevorzugt nicht schwenkbar, aufgeschraubt wird. Der Anhänger 3 wird bevorzugt um eine Schwenkachse auslenkbar/schwenkbar mit der Deichsel 3.8 an der Kupplung 2.6 des Aufbaus 2 befestigt.

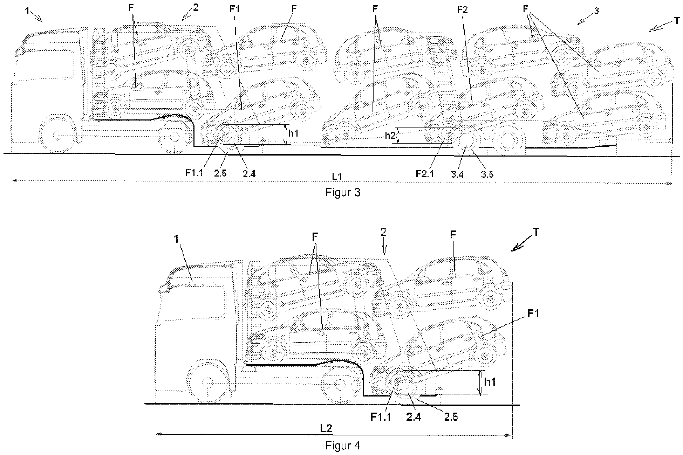

Das aufgesattelte Transportfahrzeug in Form des Fahrzeugtransporters T mit Zugmaschine 1, Aufbau 2 und Anhänger 3 im voll beladenen Zustand mit insgesamt 10 Fahrzeugen F, F1, F2 (4 auf dem Aufbau 2 und 6, auf dem Anhänger 3) wird in Figur 3 gezeigt. Der Fahrzeugtransporter T ermöglicht es, die zulässige gesetzliche Gesamthöhe und die zulässige Gesamtlänge L1 von hier ca. 18,75m plus gesetzlich zulässigem Überhang von 1,5m besser einzuhalten und dabei den Transport von zehn Fahrzeugen (Pkws) zu ermöglichen, was bisher nicht realisierbar war, da man ansonsten die zulässigen gesetzlichen Werte überschritten hätte.
Dies ist dadurch möglich, dass auf dem Auflieger 2 die Räder F1.1 des Fahrzeuges F1 um eine erste Höhe h1 zwischen die Reifen/Räder 2.5 der Nachlaufachse 2.6 und auf dem Anhänger die Räder F2.1 des Fahrzeuges F2 zwischen die Reifen/Räder 3.5 der laderaumvergrößernden Achse 3.4 um eine zweite Höhe h2 eingreifen können. Dies ist dadurch möglich, dass die Räder 2.5 der Nachlaufachse 2.4 und die Räder 3.5 der laderaumvergrößernden Achse 4.2 einen Radabstand aufweisen, der größer ist, als die Fahrzeugbreite des entsprechend geladenen Fahrzeuges (hier F1, F2) im zwischen die Räder 2.5, 3.5 eintauchenden Bereich. Weiterhin trägt zu der geringen Ladehöhe auch bei, dass der Aufbaurahmen 2.1 des Aufliegers 2 an seinem Bereich, der hinter der Zugmaschine 1 hinausragt, unter der Nachlaufachse 2.4 hindurch geführt wird und dass der Aufbaurahmen 3.1 des Anhängers 3 unter den Achsen 3.4, 3.6 des Achsaggregates A hindurchgeführt wird.

In Figur 4 ist eine weitere Variante eines Fahrzeugtransporters T dargestellt, welcher verwendet werden kann, wenn nur wenige Fahrzeuge zu transportieren sind. Der Aufbau 2, hier voll beladen mit vier Fahrzeugen F, F1, wird auf die Zugmaschine 1 aufgesattelt und ein Anhänger ist nicht erforderlich. Auch hier weisen die Räder 2.5 der Nachlaufachse 2.4 des Aufbaus 1 (Auflieger) einen Radabstand auf, der größer ist als die Breite des Fahrzeuges F1 in seinem Frontbereich, so dass das Fahrzeug F1 um eine erste Höhe h1 zwischen die Räder 2.5 der Nachlaufachse 2.4 eintauchen kann. Dadurch wird ein kompaktes Transportfahrzeug in Form eines Autotransporters T mit einer Länge L2 gebildet.
Gemäß einem nicht dargestellten Ausführungsbeispiel ist es möglich, die Nachlaufachse des Aufbaus mit einer Bereifung auszustatten, zwischen welche das Transportgut nicht eintaucht. In diesem Fall ist bereits das mögliche höhere Transportgewicht durch die Verwendung der Nachlaufachse vorteilhaft.
Gemäß einem weiteren nicht dargestellten Ausführungsbeispiel ist es auch möglich, den Anhänger direkt auf den Sattelschlepper vorzugsweise schwenkbar anzuhängen bzw. aufzusatteln.

Anstelle des Transportes von Fahrzeugen können auch andere Transportgüter mit dem Transportfahrzeug transportiert werden.

Zusammenfassend werden nochmals die Vorteile der erfindungsgemäßen Lösung hervorgehoben:
Vorteile hinsichtlich eines Aufbaus mit Nachlaufachse:
Mit unserer Entwicklung wird es möglich, gleiche Ladeproportionen wie bei einem herkömmlichen Gliederzug zu schaffen, wodurch ein gleichwertiges bzw. sogar höherwertiges Ladevolumen als beim herkömmlichen Gliederzug erreicht wird. Dies wird möglich, indem mindestens vier Fahrzeuge auf den Zugmaschinen-Aufbau verladen werden können. Dieser erfindungsgemäße Aufbau bietet dabei die gleichen Möglichkeiten hinsichtlich des An- und Absattelns (bzw. Austauschen) der Sattelzugmaschine wie herkömmliche Lösungen. So sind die besten Voraussetzungen für eine Vor-Fertigung dieses Aufbaus gegeben. Darüber hinaus vereinfacht dieser die notwendigen technischen Abnahmen, da für diese Konstruktion eine einheitliche Betriebserlaubnis existiert. Entsprechend müssen die Abnahmen nicht mehr auf die einzelnen Sattelzugmaschinen-Typen abgestimmt werden, was dazu führt, dass keine Zustimmung des Zugmaschinenherstellers erforderlich ist und somit keine Garantieeinschränkungen entstehen.

Weiterhin wird durch die am Aufbau befindliche Nachlaufachse
- das An- und Absatteln stark vereinfacht sowie
- das Risiko für eine Beschädigung des Fahrzeuges während des An- und Absattelvorgangs extrem minimiert.

Wie funktioniert die Nachlaufachse im Detail?: Der spezielle Zugmaschinenaufbau ist mit einer besonderen Nachlaufachse ausgerüstet, welche in Verbindung mit einer Luftfederung ein vereinfachtes Abheben des Aufbaus von der Sattelzugmaschine ermöglicht. Zudem ist es sogar durch das aufbaueigene Achsaggregat möglich, bei möglichen Berge- bzw. Abschleppvorgängen im Pannenfall den Aufbau selbständig zu bewegen und zu transportieren (mit Hilfe eines Bergefahrzeuges bzw. einer baugleichen Sattelzugmaschine).

Ein weiterer erheblicher Vorteil liegt in der Konstruktion am Aufbau im Bereich der Nachlaufachse: In Verbindung mit der angedachten Einzelbereifung wird ein erheblicher zusätzlicher Ladefaktor geschaffen, indem die Aushöhlung im Innenbereich eine Erhöhung der Gesamthöhe des Laderahmens ermöglicht. Hierbei werden die natürlichen Gegebenheiten des Rahmenkörpers der Sattelzugmaschine optimal hinsichtlich des Ladefaktors berücksichtigt und integriert. Auf Grundlage dieser neuen und erfinderischen Entwicklung wird es möglich, diese zusätzlich entstandene Ladehöhe mit der Gesamtlänge der Zugmaschine durch Verschachteln der zu ladenden Fahrzeuge zu kompensieren. Dies führt gleichzeitig dazu, dass durch den daraus resultierenden Laderaum im Anhänger ein größeres Ladevolumen geschafft wird.

Basierend auf jahrelangen Erfahrungen im Kfz-Transportgewerbe ist festzuhalten (und nicht zu unterschätzen), dass selbst die Schaffung von nur cm-großen Räumen entscheidend für die Ladung von einem/mehreren Fahrzeug/en mehr oder weniger sein kann.

Die nunmehr geschaffene Proportion der Zugmaschine ermöglicht zusätzlich ein enorm verbessertes Spurverhalten, da die eigentlich zwillingsbereifte Hinterachse mehr in den mittleren Bereich der Zugmaschine mit Aufbau verlagert wird, die Vorderachse der Zugmaschine wird so besser entlastet und die Antriebsachse (welche die höchste Lastaufnahme bietet) gerät automatisch mehr in den Mittelpunkt des Fahrzeuges. Wie bei einem klassischen Gliederzug wird auf diese Weise die Nachlaufeigenschaft (Spurnachlauf) des Anhängers auf Grundlage einer schlankeren Kurvenspur verbessert. Dieser Vorteil wird besonders bei der Durchfahrt enger Straßen ersichtlich.

Vorteile des erfindungsgemäßen Anhängers:
Mit dem neuartigen Anhänger ist es möglich, die Vorteile der Einzelbereifung (ein Rad an jedem Achsende) und der Zwillingsbereifung (zwei Räder an jedem Achsende) erstmalig in der Nutzung eines Mischaggregates zu vereinen - ohne den Ladefaktor zu verschlechtern. Die natürlichen Gegebenheiten des Anhängers werden zum Verladen von Fahrzeugen optimal aufeinander abgestimmt: Wir können die gleiche Nutzlast wie bei der herkömmlichen Doppelbereifung und gleichzeitig das erhöhte Ladevolumen wie bei der herkömmlichen Einzelbereifung erhalten. Das Doppelachsaggregat (siehe Abb. 1 bis 3) stellt hierbei keinen Nachteil dar, weil das Anstapeln und somit die Schaffung des Raumes für die Doppelachse automatisch gegeben ist. Lediglich ist es zwingend erforderlich, dass das mittlere Fahrzeug im Anhänger 3 im Bereich der einzelbereiften Achse 3.4 tiefer abgetaucht wird. Hierdurch wird nämlich eine Kettenreaktion ausgelöst, indem ebenso das Fahrzeug 2 tiefer verladen und in der Folge die obere Bühne mit den Fahrzeugen 3 und 4 abgesenkt werden kann.

Auf diese Weise wird
- der Schwerpunkt des Anhängers deutlich tiefer gelegt,
- das Verladen von größeren Fahrzeugen bzw. von einem zusätzlichen Fahrzeug erlaubt,
- es möglich, bei gleicher Gesamtlänge statt Kompaktfahrzeugen, Mittelklassewagen mit einem Größenunterschied von bis zu 50cm zu verladen.

Durch das neuartige Gesamtkonzept wird das gesamte Fahrzeug - mit Anhänger und Zugmaschine optimal aufeinander abgestimmt, so dass an beiden Komponenten das Ladegut weitaus besser verstaut werden kann und sich dadurch das Ladevolumen und die Nutzlast im Vergleich erhöht. Für einen Laien mag auf den ersten Blick die Bedeutung der veränderten Konstruktion nicht ersichtlich sein - jedoch bringt diese Innovation erhebliche Vorteile mit sich.

Mit einem verhältnismäßig geringen Aufwand wird ein höchstmöglicher Nutzen in sowohl ökonomischer als auch ökologischer Sicht erreicht.

## Patentansprüche

1. Transportfahrzeug, in Form eines Fahrzeugtransporters für Pkws, der eine Zugmaschine (1) mit wenigstens einer Vorderachse und wenigstens einer Hinterachse aufweist, wobei an die Zugmaschine (1)
- ein Aufbau (2), der mit einem ersten Traggerüst für Fahrzeuge in Form von PKWs versehbar ist
**und/oder**
- ein Anhänger (3) der mit einem zweiten Traggerüst für Fahrzeuge in Form von PKWs versehbar ist und ein oder mehrere Anhängerachsen (3.4, 3.6) aufweist,
koppelbar ist, **dadurch gekennzeichnet,**
- **dass** der Aufbau (2) gestellfest mit der Zugmaschine (1) verbunden ist und eine Nachlaufachse (2.4) aufweist, die im angekoppelten Zustand des Aufbaus (2) hinter der Hinterachse (1.4) der Zugmaschine (1) sitzt, wobei Räder (2.5) der Nachlaufachse (2.4) des Aufbaus (2) in einem Radabstand zueinander angeordnet sind, der ein Eintauchen mindestens eines Fahrzeuges in Form eines Pkws in dem Bereich zwischen hinterer Hinterachse (1.4) der Zugmaschine (1) und Nachlaufachse (2.4) des Aufbaus (2) nach unten in den entstandenen Raum zwischen der Hinterachse (1.4) der Zugmaschine (1) und zwischen die Räder (2.5) der Nachlaufachse (2.4) des Aufbaus (2) ermöglicht;
- **dass** der Anhänger (3) ein Achsaggregat (A) mit einer ersten Achse (3.4) und einer zweiten Achse (3.6) aufweist, wobei die erste Achse (3.4) in Form einer laderaumvergrößernden Achse mit Einzelbereifung ausgebildet ist, derart, dass deren Räder (3.5) in einem Radabstand zueinander angeordnet sind, der ein zumindest teilweises Eintauchen mindestens eines Fahrzeuges in Form eines PKWs zwischen die Räder (3.5) der laderaumvergrößernden Achse (3.4) ermöglicht und wobei die zweite Achse (3.6) zwillingsbereift ist.

2. Transportfahrzeug nach Anspruch 1, **dadurch gekennzeichnet, dass** der Aufbau (2) einen Aufbaurahmen (2.1) aufweist, der zumindest im Bereich der Nachlaufachse (2.4) ausgespart/abgesenkt und/oder seitlich verbreitert ist.

3. Transportfahrzeug nach einem der Ansprüche 1 und 2, **dadurch gekennzeichnet,**
- **dass** der Aufbaurahmen (2.1) des Aufbaus (2) zumindest im Bereich der Nachlaufachse (2.4) in etwa bis auf das Niveau des Achskörpers der Nachlaufachse (2.4) oder tiefer abgesenkt ist
und/oder
- **dass** der Anhängerrahmen (3.1) des Anhängers (3) zumindest im Bereich des Achsaggregats (A) etwa bis auf das Niveau des Achskörpers der laderaumvergrößernden ersten Achse (3.4) oder tiefer abgesenkt ist.

4. Transportfahrzeug nach einem der Ansprüche 1 bis 3, **dadurch gekennzeichnet, dass** ein Bereich des Aufbaurahmens (2.1) die Ladefläche der Zugmaschine (1) nach hinten (entgegen der Fahrtrichtung) überragt und nach unten abgewinkelt ist und dass in dem nach unten abgewinkelten Bereich die Nachlaufachse (2.4) des Aufbaus (2) angeordnet ist.

5. Transportfahrzeug nach einem der Ansprüche 1 bis 4, **dadurch gekennzeichnet, dass** der Aufbaurahmen (2.1) unter der Nachlaufachse (2.4) durchgeführt wird.

6. Transportfahrzeug nach einem der Ansprüche 1 bis 5, **dadurch gekennzeichnet, dass** der Anhängerrahmen (3.1) zumindest unter der laderaumvergrößernden Achse (3.4) im Bereich des Achsaggregats (A) des Anhängers (3) durchgeführt wird.

7. Transportfahrzeug nach einem der Ansprüche 1 bis 6, **dadurch gekennzeichnet, dass** die Nachlaufachse (2.4) einzelbereift ist.

8. Zugmaschine (1) für einen Fahrzeugtransporter nach Anspruch 1, mit wenigstens einer Vorderachse und wenigstens einer Hinterachse, wobei die Zugmaschine (1) einen Aufbau (2) aufweist, der gestellfest mit der Zugmaschine verbunden und mit einem ersten Traggerüst für Fahrzeuge in Form von PKWs versehen ist, wobei der Aufbau (2) eine Nachlaufachse (2.4) aufweist, die im angekoppelten Zustand des Aufbaus (2) hinter der Hinterachse (1.4) der Zugmaschine (1) sitzt, wobei Räder (2.5) der Nachlaufachse (2.4) des Aufbaus (2) in einem Radabstand zueinander angeordnet sind, der ein Eintauchen mindestens eines Fahrzeuges in Form eines Pkws in dem Bereich zwischen hinterer Hinterachse (1.4) der Zugmaschine (1) und Nachlaufachse (2.4) des Aufbaus (2) nach unten in den entstandenen Raum zwischen der Hinterachse (1.4) der Zugmaschine (1) und zwischen die Räder (2.5) der Nachlaufachse (2.4) des Aufbaus (2) ermöglicht.

9. Anhänger (3) für einen Fahrzeugtransporter nach Anspruch 1, mit einem zweiten Traggerüst für Fahrzeuge in Form von PKWs versehbar ist und mit mehreren Anhängerachsen und mit einem Achsaggregat (A) mit einer ersten Achse (3.4) und einer zweiten Achse (3.6), wobei die erste Achse (3.4) in Form einer laderaumvergrößernden Achse mit Einzelbereifung ausgebildet ist, derart, dass deren Räder (3.5) in einem Radabstand zueinander angeordnet sind, der ein zumindest teilweises Eintauchen mindestens eines Fahrzeuges in Form eines PKWs zwischen die Räder (3.5) der laderaumvergrößernden Achse (3.4) ermöglicht und wobei die zweite Achse (3.6) zwillingsbereift ist.

## Claims

1. Transport vehicle, specifically a vehicle transporter for cars, comprising a tractor (1) with at least one front axle and at least one rear axle, where the tractor (1) can be coupled with
- a body (2) that can be provided with a first supporting structure for vehicles, specifically passenger cars,
**and/or**
- a trailer (3) that can be provided with a second supporting structure for vehicles, specifically passenger cars, and that has one or more trailer axles (3.4, 3.6),
**characterized in that**
- the body (2) is rigidly connected with the tractor (1) and has a trailing axle (2.4), which, if the body (2) is coupled, sits behind the rear axle (1.4) of the tractor (1), where wheels (2.5) of the trailing axle (2.4) of the body (2) are arranged at a distance that allows at least one vehicle, specifically a passenger car, in the region between the last rear axle (1.4) of the tractor (1) and the trailing axle (2.4) of the body (2) to plunge into the space between the rear axle (1.4) of the tractor (1) and between the wheels (2.5) of the trailing axle (2.4) of the body (2);
- the trailer (3) comprises an axle unit (A) having a first axle (3.4) and a second axle (3.6), where the first axle (3.4) is designed in the form of a cargo-space-enlarging axle with independent wheels, namely in such a way that its wheels (3.5) are arranged at a distance that allows at least one vehicle, specifically a passenger car, to at least partially plunge between the wheels (3.5) of the cargo-space-enlarging axle (3.4) allows, and where the second axle (3.6) is fitted with dual tires.

2. Transport vehicle according to claim 1, **characterized in that** the body (2) comprises a body frame (2.1) that is recessed/lowered and/or laterally widened at least in the region of the trailing axle (2.4).

3. Transport vehicle according to claim 1 or 2, **characterized in that**
- the body frame (2.1) of the body (2) is lowered approximately to the level of the axle body of the trailing axle (2.4) or lower at least in the region of the trailing axle (2.4),
and/or
- the trailer frame (3.1) of the trailer (3) is lowered approximately to the level of the axle body of cargo-space-enlarging first axis (3.4) or lower at least in the region of the axle unit (A).

4. Transport vehicle according to one of claims 1 to 3, **characterized in that** a part of the body frame (2.1) projects beyond the load floor of the tractor (1) to the rear (opposite to the direction of travel) and is bent downwards, and that the trailing axle (2.4) of the body (2) is located in the region bent downward.

5. Transport vehicle according to one of claims 1 to 4, **characterized in that** the body frame (2.1) runs underneath the trailing axle (2.4).

6. Transport vehicle according to one of claims 1 to 5, **characterized in that** the trailer frame (3.1) runs at least underneath the load-space-enlarging axle (3.4) in the region of the axle unit (A) of the trailer (3).

7. Transport vehicle according to one of claims 1 to 6, **characterized in that** the trailing axle (2.4) is fitted with single tires.

8. Tractor (1) for a vehicle transporter according to claim 1, with at least one front axle and at least one rear axle, where the tractor (1) has a body (2) that is rigidly connected with the tractor and that is provided with a first supporting structure for vehicles, specifically passenger cars, where the body (2) has a trailing axle (2.4), which, if the body (2) is coupled, sits behind the rear axle (1.4) of the tractor (1), where wheels (2.5) of the trailing axle (2.4) of the body (2) are arranged at a distance that allows at least one vehicle, specifically a passenger car, in the region between the rear axle (1.4) of the tractor (1) and the trailing axle (2.4) of the body (2) to plunge into the space between the rear axle (1.4) of the tractor (1) and between the wheels (2.5) of the trailing axle (2.4) of the body (2).

9. Trailer (3) for a vehicle transporter according to claim 1 that can be provided with a second supporting structure for vehicles, specifically passenger cars, and that has multiple trailer axles and an axle unit (A) having a first axle (3.4) and a second axle (3.6), where the first axle (3.4) is designed in the form of a cargo-space-enlarging axle with independent wheels, namely in such a way that its wheels (3.5) are arranged at a distance that allows at least one vehicle, specifically a passenger car, to at least partially plunge between the wheels (3.5) of the cargo-space-enlarging axle (3.4) allows, and where the second axle (3.6) is fitted with dual tires.

## Revendications

1. Véhicule de transport sous forme de remorque porte-véhicules pour voitures, qui comporte un tracteur (1) avec au moins un essieu avant et au moins un essieu arrière, où peuvent être couplés au tracteur (1)
- une structure (2) qui peut être équipée d'une première armature de support pour véhicules sous forme de voitures
**et/ou**
- une remorque (3) qui peut être équipée d'une seconde armature de support pour véhicules sous forme de voitures et qui comporte un ou plusieurs essieux de remorque (3.4, 3.6),
**caractérisé en ce que**
- la structure (2) est raccordée au tracteur (1) de façon solidaire et comporte un essieu suiveur (2.4), qui à l'état raccordé de la structure (2) se trouve derrière l'essieu arrière (1.4) du tracteur (1), où les roues (2.5) de l'essieu suiveur (2.4) de la structure (2) sont disposés les unes aux autres dans un empattement, qui permet une pénétration d'au moins un véhicule sous forme de voiture dans la zone entre l'essieu arrière à l'arrière (1.4) du tracteur (1) et l'essieu suiveur (2.4) de la structure (2) vers le bas dans la zone créée entre l'essieu arrière (1.4) du tracteur (1) et entre les roues (2.5) de l'essieu suiveur (2.4) de la structure (2) ;
- la remorque (3) comporte un système d'essieu (A) avec un premier essieu (3.4) et un deuxième essieu (3.6), où le premier essieu (3.4) sous forme d'un essieu amplifiant l'espace de chargement avec montage simple est conçu de telle sorte que ses roues (3.5) sont disposées les unes aux autres dans un empattement, qui permet la pénétration au moins partielle d'au moins un véhicule sous forme de voiture entre les roues (3.5) de l'essieu amplifiant l'espace de chargement (3.4) et où le deuxième essieu (3.6) est en montage jumelé.

2. Véhicule de transport selon la revendication 1, **caractérisé en ce que** la structure (2) comporte un châssis (2.1) qui est au moins encastré/abaissé et/ou élargi latéralement dans la zone de l'essieu suiveur (2.4).

3. Véhicule de transport selon l'une des revendications 1 et 2, **caractérisé en ce que**
- le châssis (2.1) de la structure (2) est abaissé au moins dans la zone de l'essieu suiveur (2.4) approximativement jusqu'au niveau du corps d'essieu de l'essieu suiveur (2.4) ou plus profondément
et/ou
- le châssis de remorque (3.1) de la remorque (3) est abaissé au moins dans la zone du système d'essieu (A) approximativement jusqu'au niveau du corps d'essieu du premier essieu amplifiant l'espace de chargement (3.4) ou plus profondément.

4. Véhicule de transport selon l'une des revendications 1 à 3, **caractérisé en ce qu'**une zone du châssis (2.1) dépasse de la surface de chargement du tracteur (1) à l'arrière (dans le sens opposé de la direction) et s'incline vers le bas et **en ce que** l'essieu suiveur (2.4) de la structure (2) est disposé dans la zone inclinée vers le bas.

5. Véhicule de transport selon l'une des revendications 1 à 4, **caractérisé en ce que** le châssis (2.1) est passé sous l'essieu suiveur (2.4).

6. Véhicule de transport selon l'une des revendications 1 à 5, **caractérisé en ce que** le châssis de la remorque (3.1) est passé au moins sous l'essieu amplifiant l'espace de chargement (3.4) dans la zone du système d'essieu (A) de la remorque (3).

7. Véhicule de transport selon l'une des revendications 1 à 6, **caractérisé en ce que** l'essieu suiveur (2.4) est en montage simple.

8. Tracteur (1) pour une remorque porte-véhicules selon la revendication 1, avec au moins un essieu avant et au moins un essieu arrière, où le tracteur (1) comporte une structure (2) qui est raccordée au tracteur de façon solidaire et équipée d'une première armature de support pour véhicules sous forme de voitures, où la structure (2) comporte un essieu suiveur (2.4) qui, à l'état raccordé de la structure (2), se trouve derrière l'essieu arrière (1.4) du tracteur (1), où les roues (2.5) de l'essieu suiveur (2.4) de la structure (2) sont disposés les unes aux autres dans un empattement, qui permet une pénétration d'au moins un véhicule sous forme de voiture dans la zone entre l'essieu arrière à l'arrière (1.4) du tracteur (1) et l'essieu suiveur (2.4) de la structure (2) vers le bas dans la zone créée entre l'essieu arrière (1.4) du tracteur (1) et entre les roues (2.5) de l'essieu suiveur (2.4) de la structure (2).

9. Remorque (3) pour une remorque porte-véhicules selon la revendication 1, qui peut être équipée d'une seconde armature de support pour véhicules sous forme de voitures et avec plusieurs essieux de remorque et avec un système d'essieu (A) avec un premier essieu (3.4) et un deuxième essieu (3.6), où le premier essieu (3.4) sous forme d'un essieu amplifiant l'espace de chargement avec montage simple est conçu de telle sorte que ses roues (3.5) sont disposées les unes aux autres dans un empattement, qui permet la pénétration au moins partielle d'au moins un véhicule sous forme de voiture entre les roues (3.5) de l'essieu amplifiant l'espace de chargement (3.4) et où le deuxième essieu (3.6) est en montage jumelé.
